# EUROPÄISCHE PATENTSCHRIFT

(11) **EP 1 600 261 B1**
(45) Veröffentlichungstag und Bekanntmachung des Hinweises auf die Patenterteilung: **06.07.2011**
(21) Anmeldenummer: 05009640.3
(22) Anmeldetag: 03.05.2005
(51) Int. Cl.: B25B 5/08, B23Q 16/00

(54) **Spanneinrichtung zum Spannen von Bauteilen**
Clamping device for clamping of components
Dispositif de serrage pour le serrage de composants

(30) Priorität: 28.05.2004 DE 102004026187
(43) Veröffentlichungstag der Anmeldung: 30.11.2005
(73) Patentinhaber: Andreas Maier GmbH & Co. KG, 70734 Fellbach (DE)
(72) Erfinder: Cianci, Pasquale, 73252 Lenningen (DE)
(74) Vertreter: Hoeger, Stellrecht & Partner Patentanwälte

(56) Entgegenhaltungen:
- EP-A- 0 503 191
- EP-A- 0 785 049
- DE-A1- 4 020 981
- US-A- 4 804 171

## Beschreibung

Die auf den Anmelder zurückgehende EP 0785 049 A1 zeigt eine Spanneinrichtung zum Festspannen von Werkstücken. Die Werkstücke verfügen über Bauteilöffnungen, in die Spannhülsen der Spanneinrichtung eindringen. Die Spannhülsen werden durch einen Zugbolzen in der Bauteilöffnung verspannt, damit das Werkstück anschließend mit Hilfe der Zugbolzen gegen die Maschinenauflage angedrückt werden kann.

Jeder Spannbolzen sitzt in einem Kolben, der in einer Zylinderkammer eines Zylindergehäuses axial verschieblich ist. Der Kolben selber bildet wiederum eine Hydraulikkammer, um den Spannbolzen relativ zu dem ersten Kolben zu verschieben. Mit Hilfe des ersten Kolbens wird der Spannbolzen aus dem Zylindergehäuse in Richtung auf die Werkstückauflage vorgeschoben. Durch den zweiten Kolben wird sodann der Zugbolzen ein Stück weit zurückgezogen, wodurch die Spannhülsensegmente gespannt werden können. Die Spannhülsensegmente liegen einem Spannglied an, das die Gestalt einer auf der Spitze stehenden, vierseitigen Pyramide hat und an dem Kopf des Spannbolzens befestigt ist.

Dementsprechend sind vier Segmente vorgesehen, die komplementäre Schrägflächen aufweisen. Beim Spannen wandern diese Spannsegmente gleichmäßig in radialer Richtung voneinander weg. Es entstehen in einer Bauteilöffnung mit Kreisquerschnitt vier linienförmige Berührungen, die jeweils um 90° gegeneinander versetzt sind.

Diese Spanneinrichtung ist am Markt an sich sehr erfolgreich. Es hat sich jedoch gezeigt, dass die Bauteilöffnungen bei den zu bearbeitenden Werkstücken aufgrund des vorhergehenden Urformvorgangs gewissen Toleranzen unterliegen. Da die Spannbacken symmetrisch auseinander wandern, entstehen in dem Werkstück Zug- oder Druckspannungen, sobald der Abstand der Bauteilöffnungen voneinander kleiner oder größer ist als der Abstand von zwei Zugankern mit den zugehörigen Spannbacken. Die auf der Verbindungslinie zwischen den Zugbolzen liegenden und parallel zu dieser Verbindungsgeraden sich bewegenden Spannbacken neigen dazu, das Werkstück zu verdrücken.

Beim Spannen vergrößert sich der Abstand zwischen den Spannbacken, d.h. die Trennfugen zwischen benachbarten Spannbacken weiten sich, was eine weitere Beschränkung darstellt. Hier können Späne eindringen, die ein ordnungsgemäßes Rückkehren der Spannbacken in die Ruhestellung verhindern. Eingedrungene Späne können das Abnehmen des Werkstücks von der Spanneinrichtung blockieren.

Die US 4 804 171 A offenbart eine Spanneinrichtung gemäß dem Oberbegriff von Anspruch 1.

Der vorliegenden Erfindung liegt die Aufgabe zugrunde, eine Spanneinrichtung zu schaffen, die es gestattet, beim Spannen eine statische Überbestimmung zu vermeiden, und die weniger empfindlich gegen Verunreinigungen durch Späne ist.

Diese Aufgabe wird erfindungsgemäß mit einer Spanneinrichtung mit den Merkmalen des Anspruchs 1 gelöst.

Bei der neuen Spanneinrichtung sitzt in einem Gehäuse ein Zugbolzen. Der Zugbolzen führt durch eine Durchgangsöffnung in dem Gehäuse hindurch. An einem Ende des Zugbolzens befindet sich ein Keilglied das lediglich zwei Keilflächen aufweist. Die beiden Keilflächen definieren Ebenen, die sich an einer Schnittlinie durchsetzen, die rechtwinklig zu der Längsachse des Zugbolzens verläuft.

Mit den beiden Keilflächen wirken lediglich zwei Spannbacken zusammen, von denen jede eine Außenfläche und eine mit der Keilfläche zusammenwirkende, vorzugsweise ebene Fläche, aufweist.

Beim Spannen dieser Anordnung bewegen sich die Spannbacken auseinander, können jedoch in Richtung parallel zu der zuvor erwähnten Schnittlinie wandern. Damit können sich die Spannbacken in einer Bauteilöffnung entsprechend der Lage der Bauteilöffnung in radialer Richtung ausrichten.

Die Verwendung von lediglich zwei Spannbacken, die auf den zugeordneten Keilflächen des Zugbolzens gleiten, verhindern einen gegen Verunreinigungen empfindlichen Spalt. Der O-Ring, der gleichzeitig als Spannmittel dient, um die Klemmbacken gegen die Keilflächen zu drücken, dichtet auch zusätzlich gegen die Flanken des Keilglieds ab, die zwischen den Keilflächen liegen. Es können keine Späne eindringen, die in irgendeiner Weise die Wirksamkeit der Rückholmittel bzw. Vorspannmittel beeinträchtigen.

Das Gehäuse der neuen Spanneinrichtung ist vorzugsweise als Kolben ausgebildet und verschieblich in einem Zylindergehäuse gelagert. Dadurch kann die Spanneinrichtung nach Bedarf gesenkt bzw. vorgeschoben werden. Hierdurch vereinfacht sich die Werkstückaufnahme erheblich, weil im versenkten Zustand der Spanneinrichtung das Werkstück leichter auf den Auflageflächen positioniert werden kann.

Das Gehäuse der Spanneinrichtung hat bevorzugt eine rotationssymmetrische Gestalt, die sich sehr einfach herstellen lässt.

Wenn das Gehäuse der Spanneinrichtung in dem Zylindergehäuse versenkbar ist, ist zweckmäßigerweise ein Bund vorgesehen, der radial vorsteht und in dessen Außenumfangsfläche eine Nut enthalten ist, die einen abdichtenden O-Ring aufnimmt.

Das Zylindergehäuse enthält eine zylindrische Bohrung, die zur Aufnahme des Gehäuses der Spanneinrichtung dient.

Die Betätigung wird einfacher, wenn das Gehäuse durch eine Feder in Richtung auf die abgesenkte Stellung vorgespannt ist.

Die Bohrung kann im einfachsten Falle mit einem Deckel verschlossen werden, der eine Öffnung zum Durchtritt des Keilglieds und der Spannbacken aufweist.

Der Deckel ist bevorzugt Teil einer in das Zylindergehäuse eingeschraubten Kappe, die gleichzeitig von dem übrigen Zylindergehäuse beabstandete Auflageflächen für das Werkstück bildet. Dadurch wird die Empfindlichkeit gegen Verunreinigung durch Späne und dergleichen vermieden. Außerdem bildet die Kappe eine definierte Auflagefläche, was insbesondere bei der Bearbeitung von urgeformten Teilen zweckmäßig ist, die keine exakt saubere Anlageflächen aufweisen.

Die Kappe kann einen axialen Kragen aufweisen, der in das Zylindergehäuse eingeschraubt ist.

An dem Deckel kann sich eine Schraubenfeder abstützen, die das Gehäuse der Spanneinrichtung in Richtung auf die abgesenkte Stellung vorspannt.

Der Zugbolzen ist an seinem von dem Keilglied abliegenden Ende mit einem Betätigungsglied versehen.

An dem Betätigungsglied greift bevorzugt eine Fluidkolbenanordnung an, die in dem Zylindergehäuse axial verschieblich angeordnet ist.

Eine sehr einfache Fluidkolbenanordnung besteht in einer Zylinderkammer, in der ein Fluidkolben axial verschieblich ist. An dem Kolben ist eine Mitnehmerscheibe befestigt, die sich in einem zu der Zylinderkammer koaxialen Raum bewegt.

Die Mitnehmerscheibe weist eine Außenkontur auf, die der Außenkontur einer Kugelzone entspricht, die symmetrisch zum Kugeläquator liegt. Dadurch wird ein Verklemmen der Mitnehmerscheibe in Folge einseitiger Belastung vermieden.

Der Radius der Krümmung entspricht dem Durchmesser des koaxialen Raumes, in dem sich die Mitnehmerscheibe senkrecht zu ihren Flachseiten bewegt.

Die Mitnehmerscheibe ist in der Nähe ihres Randes mit dem Zugbolzen über dessen Betätigungsglied verbunden.

Mittels einer Druckfeder, die sich an der Mitnehmerscheibe abstützt, ist der Zugbolzen in die vorgeschobene Lage vorgespannt.

Eine gute Abdichtwirkung wird erzielt, wenn die Flanken des Keilglieds, die die Keilflächen miteinander verbinden, Ausschnitte aus Zylinderflächen sind.

Eine gute Spannwirkung einerseits und ein leichtes Lösen wird erzielt, wenn der Winkel, dem die beiden Keilflächen miteinander einschließen, zwischen 12° und 30° liegt, vorzugsweise ca. 20°beträgt. Je kleiner der Winkel ist, umso größer ist die Spannwirkung, andererseits besteht aber die Gefahr, dass ein Lösen der Spannbacken nur schwer möglich ist.

Abgesehen von den Keilflächen des Keilglieds ist der Zugbolzen bevorzugt rotationssymmetrisch.

Gute Festigkeitsverhältnisse ergeben sich insbesondere bei miniaturisierter Spanneinrichtung, wenn das Keilglied mit dem Zugbolzen einstückig ist.

Eine gute Verankerung des Werkstücks wird erreicht, wenn die Spannbacken an ihrer Außenseite mit einer Profilierung versehen sind. Die Profilierung ist im Querschnitt bevorzugt sägezahnförmig.

Die Lage der Spannbacken lässt sich sehr gut fixieren, wenn die Spannbacken mit einem radial weg stehenden Flansch versehen sind, der mit einer Stirnfläche des Gehäuses zusammenwirken kann. Die Stirnfläche des Gehäuses wirkt als Gleitfläche für die Spannbacken und definiert deren Höhe gegenüber dem Gehäuse.

Das Vorspannmittel ist von wenigstens einem O-Ring gebildet, der bevorzugt in entsprechenden miteinander fluchtenden Nuten der beiden Spannbacken liegt. Die Nuten sind so gestaltet, dass sie jeweils weitgehend ohne Radiusänderung, bezogen auf die Bolzenachse, in die Flankenflächen des Keilgliedes übergehen. Dabei kann ein Knick an dieser Stelle in Kauf genommen werden. Eine kleine Radiusdifferenz, die sich aufgrund der Verschiebung längs der Keilfläche ergibt, ist hingegen unschädlich, weil der Raum zu klein ist als das Späne eindringen können, die aufgrund ihrer Größe die Funktionsfähigkeit beinträchtigen können.

Im Übrigen sind Weiterbildungen der Erfindung Gegenstand von Unteransprüchen.

Beim Studium der Figurenbeschreibung wird auch klar, dass eine Reihe von Abwandlungen möglich sind, die sich aus den jeweiligen Anwendungsgebieten und den sonstigen Randbedingungen ergeben. Diese Änderungen brauchen nicht weiter erläutert zu werden, da sie für den Fachmann ohne weiteres naheliegend sind.

In der Zeichnung ist ein Ausführungsbeispiel des Gegenstandes der Erfindung dargestellt. Es zeigen:
- Fig. 1: eine Werkstückspannvorrichtung in einem Längsschnitt,
- Fig. 2: einen Ausschnitt des Zugbolzens mit dem Keilglied und den beiden Spannbacken aus der Spannvorrichtung nach Fig. 1, in einer schematisierten perspektivischen Darstellung,
- Fig. 3: den Zugbolzen nach Fig. 2 mit dem Keilglied und den beiden Spannbacken, in einer schematisierten perspektivischen Explosionsdarstellung,
- Fig. 4 und 5: eine der Spannbacken in einer Ansicht senkrecht zur Keilfläche bzw. parallel zur Keilfläche,

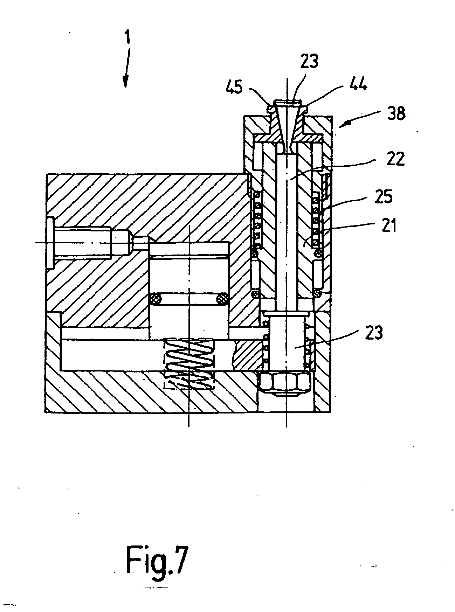

- Fig. 6 und 7: unterschiedliche Positionen der Spannvorrichtung, jeweils in einer Darstellung entsprechend Fig. 1, und
- Fig. 8: ein Ausführungsbeispiel mit einem im wesentlichen stillstehenden Gehäuse, in einer Darstellung ähnlich Fig. 1.

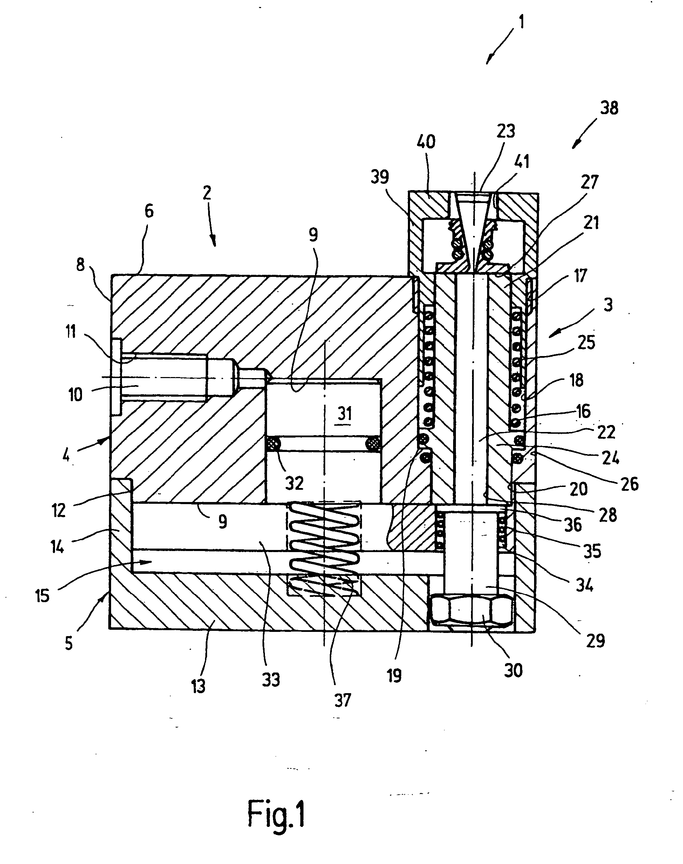

Fig. 1 zeigt in einer geschnittenen Darstellung eine Spannvorrichtung 1, die dazu vorgesehen ist, Werkstücke auf Werkstücktischen von Bearbeitungsmaschinen fest zu spannen. Insbesondere eignet sich die gezeigte Spannvorrichtung 1 dazu, die Werkstücke mit Hilfe von Öffnungen, die in dem betreffenden Bauteil eingegossen sind, festzuspannen.

Zu der Spannvorrichtung gehört ein zweiteiliges Zylindergehäuse 2, in dem axial verschieblich eine Spanneinrichtung 3 angeordnet ist.

Das Zylindergehäuse 2 setzt sich aus einem zylindrischen Oberteil 4 und einem becherartigen Unterteil 5 zusammen. Das zylindrische Oberteil 4 wird von einer planen Oberseite 6, einer dazu parallelen planen Unterseite 7, sowie einer zylindrischen Umfangsfläche 8 begrenzt. Von der Unterseite 7 her führt konzentrisch in das Oberteil 4 eine zylindrischer Sackbohrung, die eine Zylinderkammer 9 bildet. Seitlich in die Zylinderkammer 9, die von der Sackbohrung gebildet ist, führt ein Anschlusskanal 10, der nach außen in der Umfangsseite 8 mündet und der ein Anschlussgewinde 11 enthält.

An der Unterseite 7 weist das Gehäuseoberteil 4 einen ringförmigen umlaufenden Falz 12 auf, der als Zentrierung und zur Aufnahme des Gehäuseunterteils 5 dient.

Das Gehäuseunterteil 5 ist becherförmig gestaltet und setzt sich aus einem zylindrischen Boden 13 sowie einer rohrförmigen, von dem Boden 13 aufragenden Wand 14, zusammen. Der Boden 13 ist an der Unterseite glatt und kann auf einen Maschinentisch befestigt werden.

Die Wand 14 steckt im montierten Zustand mit ihrem freien Ende in dem Falz 12. Zwischen der Unterseite 7 des Gehäuseoberteils 4 und dem Boden 13 des Gehäuseunterteils 5 sowie seitlich innerhalb des rohrförmigen Fortsatzes 14 befindet sich ein Gehäuseinnenraum 15.

Die Verbindungsmittel, die den Boden 5 an dem Gehäuseoberteil 4 sichern, sind in der Zeichnung nicht dargestellt, da sie für das Verständnis der Erfindung keine Bedeutung haben.

Seitlich neben der Zylinderkammer 9, die in axialer Richtung in dem Gehäuseoberteil 4 verläuft, befindet sich eine Durchgangsbohrung 16. Die Durchgangsbohrung 16 ist achsparallel zu der Zylinderkammer 9, jedoch gegenüber dieser radial versetzt. Sie beginnt mit einem an der Oberseite 6 liegenden Innengewinde 17 und geht von dort in einen glatten Abschnitt 18 über, der die gleiche lichte Weite wie das Gewinde 17 hat. Der zylindrische Abschnitt 18 endet bei einer Ringschulter 19, an der sich die Durchgangsbohrung 16 in einem Abschnitt 20 mit reduziertem Durchmesser fortsetzt. Der Abschnitt 20 mündet, wie dargestellt, innerhalb der Fläche, die durch den Falzes 12 umgrenzt ist, und damit in dem Innenraum 15.

Ein Abschnitt der Durchgangsbohrung 16, nämlich der Abschnitt 18, dient als Zylinderklammer, innerhalb derer sich die Spanneinrichtung 3 befindet.

Zu der Spanneinrichtung 3 gehört ein hülsenförmiges Gehäuse 21 sowie ein darin geführter Zugbolzen 22, der an seinem oberen Ende ein Keilglied 23 trägt.

Das hülsenförmige Gehäuse 21 ist ein im Wesentlichen zylindrischer Körper, der im unteren Bereich mit einem Bund 24 versehen ist. Der Bund 24 enthält eine umlaufende Ringnut in der ein O-Ring aufgenommen ist, mit dessen Hilfe der Bund 24 gegen die Innenseite des Abschnittes 18 abgedichtet ist.

Oberhalb des Ringbunds 24 weist das Gehäuse 21 einen reduzierten Durchmesser auf derart, dass ein Ringspalt entsteht, der der Aufnahme einer Druckfeder 25 dient. Die Druckfeder 25 stützt sich einends auf dem Bund 24 ab.

Unterhalb des Bunds 23 entspricht der Durchmesser des Gehäuses 21 dem Durchmesser des Abschnittes 20. Auf diese Weise kann das Gehäuse 21 innerhalb des Abschnittes 18 als Kolben wirken. Hierzu mündet außerdem in die Bohrung 16 oberhalb der Ringschulter 19 eine seitliche Bohrung 26 über die Druckmedium zugeführt werden kann.

Am oberen Ende trägt das Gehäuse 21 eine plane, ringförmige Stirnfläche 27, von der eine zylindrische Durchgangsbohrung 28 ausgeht.

In der zylindrischen Durchgangsbohrung 28 sitzen der zylindrische Zugbolzen 22, der unterhalb des Gehäuses 21 einen im Durchmesser vergrößerten zylindrischen Abschnitt 29 aufweist. Der Abschnitt 29 endet an einem Gewinde auf dem eine Mutter 30 aufgeschraubt ist.

Die Betätigung des Zugbolzens 22 geschieht mit Hilfe eines Kolbens 31, der in der Zylinderkammer 9 mit Hilfe eines O-Rings 32 abgedichtet sitzt. Der Kolben 31 ist an seinem nach unten zeigenden Stirnende mit einer Mitnehmerscheibe 33 versehen. Die Mitnehmerscheibe 33 hat die Gestalt einer Kugelzone die symmetrisch zum Kugeläquator liegt und einen Durchmesser aufweist entsprechendem dem Durchmesser des Innenraumes 15. Seitlich versetzt ist die Mitnehmerscheibe 33 mit einer durchgehenden Stufenbohrung 34 versehen, durch die der zylindrische Fortsatz 29 des Zugbolzens 22 hindurch führt. Die Stufenbohrung 34 öffnet sich nach oben in Richtung auf das hülsenförmige Gehäuse 21. In dem Ringspalt zwischen dem Fortsatz 29 und der Stufenbohrung 34 sitzt eine Rückholfeder 35, die als Druckfeder ausgebildet ist. Mit Hilfe der Druckfeder 35 wird der Zugbolzen 22 nach oben vorgespannt, wozu er an der Übergangsstelle zu dem Fortsatz 29 mit einem Ringbund 36 versehen ist.

Der Durchmesser des Ringbunds 36 ist größer als der Durchmesser des Fortsatzes 29, aber kleiner als der Außendurchmesser des Gehäuses 21, so dass er durch den Abschnitt 20 der Bohrung 16 hindurch passt.

Eine Schraubendruckfeder 37, die sich auf dem Boden 13 abstützt, schiebt im drucklosen Zustand den Kolben 31 nach oben, bis die Mitnehmerscheibe 33 an der planen Unterseite 7 des Gehäuseoberteils 2 aufliegt.

In das bereits erwähnte Gewinde 17 der Durchgangsbohrung 16 ist eine Kappe 38 eingeschraubt die einen zylindrischen Kragen 39 mit einem entsprechenden Gewinde und einem Kappenboden 40 aufweist. Durch den Kappenboden 40 führt eine Bohrung 41 die koaxial zu der Bohrung 16 ist. An dem Kragen 39 liegt das andere Ende der Druckfeder 25 an.

Der Kappenboden 40 bildet eine plane, zu der Unterseite des Bodens 13 parallele Auflagefläche für ein festzuspannendes Werkstück.

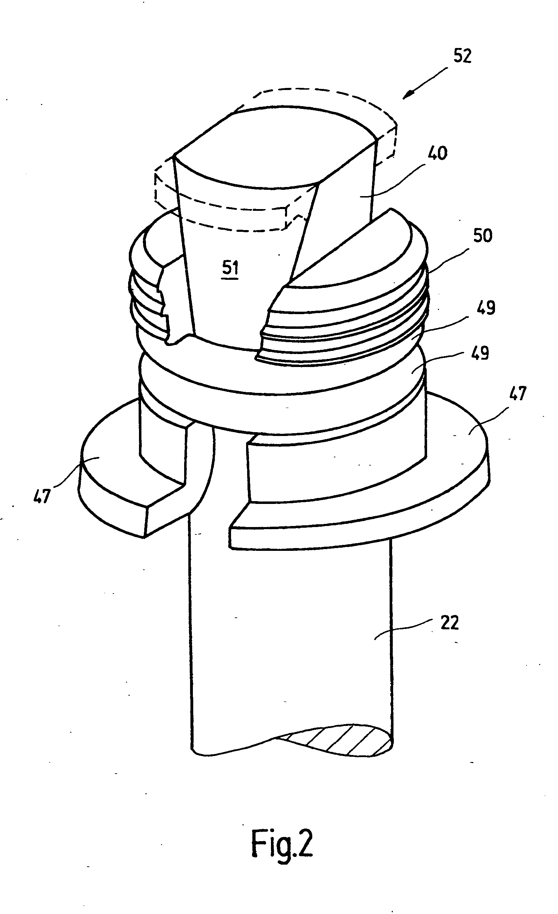

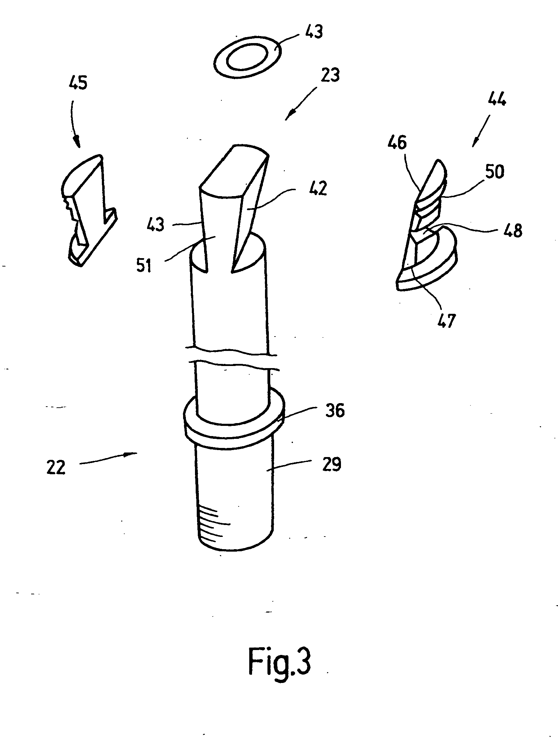

Die nach oben zeigende Stirnseite des Zugbolzens 22 trägt, wie die Fig. 2 und 3 erkennen lassen, das Keilglied 23. Das Keilglied 23 wird von zwei ebenen Keilflächen 42 und 43 begrenzt. Diese beiden Keilflächen 42 und 43 definieren zwei Ebenen, die sich an einer Schnittgeraden schneiden, die rechtwinklig zu der Längsachse des im Übrigen zylindrischen bzw. rotationssymmetrischen Zugbolzens 22 schneiden. Die Schnittgerade liegt in Richtung auf den Boden 13 der Spannvorrichtung, d.h. das Keilglied 23 steht quasi auf der Spitze.

Mit jeder der beiden Keilflächen 42, 43 wirkt eine zugehörige Spannbacke 44 und 45 zusammen. Die beiden Spannbacken 44 und 45 sind untereinander gleich. Es genügt deswegen die Erläuterung einer der beiden Spannbacken, da diese Erläuterung sinngemäß auch für die andere Spannbacke gilt.

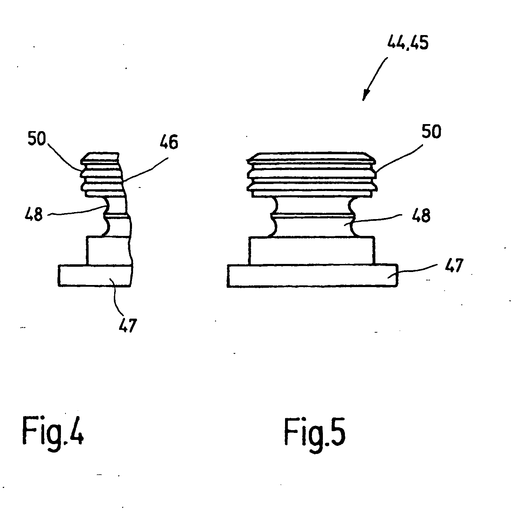

Gemäß den Fig. 3, 4 und 5 weist die Spannbacke 44 eine zu der Keilfläche 42 parallele Keilfläche 46 auf. Die Fläche 46 ist eine gerade Fläche, d.h. die Erzeugende ist eine Gerade. Am unteren Ende geht die Spannbacke 44 in einen halbkreisförmigen Abschnitt eines Ringbundes 47 über, mit dem die Spannbacke 44, wie Fig. 1 erkennen lässt, auf der Stirnseite 27 des Gehäuses 21 aufliegt. Oberhalb des Ringbunds 47 ist die Spannbacke 44 von einer einhüllenden Zylinderfläche begrenzt, in der sich eine oder zwei Nuten 48 für einen oder zwei O-Ringe 49 befindet. Oberhalb der Nut 48, d.h. in Richtung auf das freie Ende der Spannbacke 44 ist die zylindrische Außenseite mit einer sägezahnförmigen Profilierung 50 versehen.

Im montierten Zustand liegen die beiden Spannbacken 44 und 45 mit ihrer Keilfläche 46 an der zugehörigen Keilfläche 42 bzw. 43 des Keilglieds 23 an. In dieser Anlagestellung werden sie durch den in der O-Ringnut 48 liegenden O-Ring 49 festgehalten. Bei der. Darstellung in Fig. 1 oder 2 sind anstelle eines O-Rings 49 zwei unmittelbar benachbarte O-Ringe gezeigt.

Fig. 2 lässt in vergrößerter Darstellung das Zusammenwirken zwischen den beiden Spannbacken 44 und 45 mit dem Zugbolzen 22 bzw. dem Keilglied 23 erkennen.

Zwischen den beiden Keilflächen 42 und 43 wird das Keilglied 23 von Flankenflächen 51 begrenzt, die eine glatte Fortsetzung der zylindrischen Fläche des Zugbolzens 22 darstellt. Der Durchmesser der O-Ringnut 48 ist so gewählt, dass der O-Ring an den beiden diametral gegenüber liegenden Flankenflächen 51 über eine weite Strecke anliegt. Lediglich ein vergleichbar extrem kleiner Zwickelbereich am Übergang zwischen dem Ende der Ringnut 48 zu der Flankenfläche 51 ist offen.

Es ist aber auch denkbar, die Flankenflächen 51 so zu gestalten, dass beim Übergang des O-Rings 49 aus der Nut 46 auf die Flankenfläche 51 praktisch keinerlei Öffnung entsteht.

Auch im ersteren Fall ist die Öffnung so klein, dass keine Späne eindringen können, die die Funktion behindern können.

Soweit keine Dimensionsangaben gemacht wurden, ergeben sich diese aus der nachfolgenden Funktionsbeschreibung.

Zur Erläuterung der Funktion sei angenommen, dass sich die Spannvorrichtung 1 in der Ausgangstellung nach Fig. 1 befindet. In dieser Position wird das als Kolben dienende Gehäuse 21 mit Hilfe der Druckfeder 25, die sich an dem Kragen 39 der Kappe 38 abstützt, in die gezeigte Stellung zurückgeschoben, bis der Bund 24 auf der Schulter 19 aufliegt. Die Druckfeder 25 ist kräftiger als die Druckfeder 35.

Die Zylinderkammer 9 ist drucklos und die Druckfeder 37 schiebt den Kolben 9 in die Zylinderkammer soweit zurück, bis die Mitnehmerscheibe 33 an der Unterseite 7 anliegt.

Mittels der Druckfeder 35 ist der Zugbolzen 22 nach oben geschoben, bis der Ringbund 36 an der Unterseite des Gehäuses 21 anliegt. In dieser Stellung ist das Keilglied 23 bis unter die Außenseite des Kappenbodens 40 zurückgezogen. Durch die Wirkung der O-Ringe 49 sind die beiden Spannbacken 44 und 45 nach unten in Richtung auf die Spitze des Keilglieds 23 geschoben, bis sie mit ihren Bundflächen 45 auf der oberen Stirnseite 27 des Gehäuses 21 aufliegen.

Das Werkstück kann frei auf der nach oben zeigenden planen Oberseite des Kappenbodens 40 hin und her geschoben und fixiert werden.

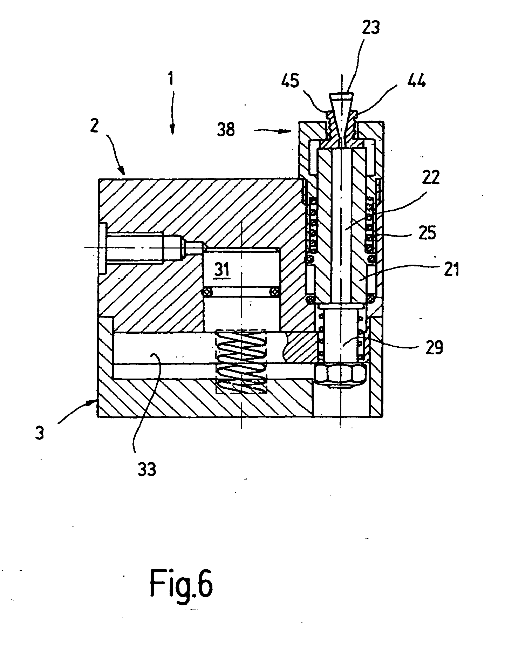

Sobald sich das Werkstück an der richtigen Stelle befindet, wird zunächst über den Anschluss 26 der Zylinderraum unterhalb des Ringbunds 24 unter Druck gesetzt. Dadurch wird das als Kolben wirkende Gehäuse 21 nach oben in Richtung auf den Kappenboden 40 vorgeschoben. Das Keilglied 23 mit den daran sitzenden Klemmbacken 44 und 45 wird durch die Bohrung 41 hindurch nach oben geschoben, wie dies Fig. 6 erkennen lässt. Die Druckfeder 35 bewirkt gleichzeitig mit dem Vorschieben des Gehäuses 21 ein Ausschieben des Zugbolzens 22, damit das Gewicht des Zugbolzens 22 auf keinen Fall ein Spreizen der beiden Klemmbacken 44 und 453 bewirken kann.

Die Vorschubbewegung des Gehäuses 21 ist beendet, wenn der Ringbund 24 an der Unterseite des Kragens 38 anstößt. In dieser Stellung hat der Ringbund 47 der beiden Klemmbacken 42 und 43 ein geringes Spiel zwischen der Stirnseite 27 des Gehäuses 21 und der planen Unterseite des Kappenbodens 40, wie dies Fig. 6 in der Endstellung zeigt. In dieser Stellung befinden sich die beiden Klemmbacken 44 und 45 nach wie vor im Bereich der Wurzel des Keilgliedes 23, d.h. an dessen schwächster Stelle. Sie haben dabei den kleinsten radialen Abstand voneinander und können ohne weiteres in die entsprechende Öffnung oder Bohrung des zu bearbeitenden Werkstücks eindringen.

Mit dem Erreichen der Position nach Fig. 6 befinden sich die beiden Klemmbacken 44 und 45 mit ihrer Profilierung 50 innerhalb der Bohrung des festzuhaltenden Werkstücks. Dieses ist aus Übersichtlichkeitsgründen in Fig. 6 nicht gezeigt.

Sodann wird die Zylinderkammer 9 unter Druck gesetzt, um den Kolben 31 auszutreiben. Dadurch wird die Mitnehmerscheibe 33 nach unten geschoben. Sie legt sich an der Mutter 30 an und zieht den Zugbolzen 22 nach unten. Der Abwärtsbewegung können die beiden Klemmbacken 44 und 45 nicht folgen, da sie sich auf dem hülsenförmigen Gehäuse 21 abstützen. Als Folge der Abwärsbewegung werden die beiden Klemmbacken 44 und 45 gegen die Wirkung des O-Rings bzw. der O-Ringe 49 voneinander gespreizt und gegen die Innenwand des Bohrung des Werkstücks angepresst.

Da die erfindungsgemäße Anordnung lediglich zwei Spannbacken aufweist, können sich diese beiden Spannbacken in Richtung, die parallel zu den beiden Keilflächen 42 und 43 und rechtwinklig zu der Längsachse des Zugbolzens 22 liegt, in der Bohrung zentrieren.

Wenn angenommen wird, dass das Werkstück mit drei derartigen Spannvorrichtungen 1 gespannt wird, ist es zweckmäßig, die Spannvorrichtungen so auszurichten, dass die Keilflächen 42 und 43 sämtlicher Spannvorrichtungen in Richtung auf einen gemeinsamen Mittelpunkt ausgerichtet sind, der beispielsweise der Schnittpunkte der Winkelhalbiernden eines Dreiecks ist, dessen Ecken durch die drei Spannbolzen 22 der drei beteiligten Spannvorrichtungen 1 gebildet ist. Die Spannbacken 44 und 45 jeder Spannvorrichtung können in Richtung auf diesen gedachten Schnittpunkt geringfügig wandern und damit Lagertoleranzen der Spannbohrungen relativ zu den Zugbolzen ausgleichen. Ein Verspannen des Werkstücks beim Festziehen der Spannbolzen und ein daraus resultierender Gestaltsfehler nach der Bearbeitung und nach dem Entspannen wird vermieden.

Im Spannzustand liegen die O-Ringe 49 innerhalb der Bohrung 41 und dichten dort ab.

Eine Zentrierung des Werkstücks lässt sich noch erleichtern bzw. verbessern, wenn das Keilglied 23 gemäß Fig. 2 mit einem Hammerkopf 52 versehen ist, der in Fig. 2 gestrichelt eingezeichnet ist. Der Hammerkopf 52 kragt, wie die Figur erkennen lässt, seitlich über die Flankenflächen 51 über, während sich die Keilflächen 42 und 43 glatt fortsetzen.

Gleichzeitig wirkt der Hammerkopf 52 quasi als Dach und hindert ebenfalls Späne, die sich auf dem O-Ring 49 ablagern können, daran beim Absenken des Spannbolzens in die Bohrung 41 einzudringen.

Anstelle des Hammerkopfs 52 kann auch ein runder Pilzkopf verwendet werden, der im eingefahrenen Zustand die Bohrung 41 völlig verschließt.

Zum Entspannen wird zunächst die Zylinderkammer 9 drucklos gemacht, wodurch die Mitnehmerscheibe aufgrund der Wirkung der Druckfeder 37 die Mitnehmerscheibe 33 nach oben fährt. Der Spannbolzen kann dadurch mittels der Druckfeder 35 nach oben geschoben werden, was es den Klemmbacken 44 und 45 ermöglicht, sich aufeinander zuzubewegen. Der klemmende Kontakt mit den Flanken der Bohrung des zu bearbeitenden Werkstücks wird aufgehoben und es kann im nachfolgenden Funktionsschritt die Zylinderkammer, die von dem Bohrungsabschnitt 18 zwischen der Schulter und dem Ringbund 24 gebildet ist, entlüftet werden. Die Druckfeder 25 schiebt das Gehäuse 21 gegen die Wirkung der Feder 35 zurück, womit die Spannbacken 44 und 45 in den Innenraum der Kappe 40 zurückgezogen werden. Das Werkstück kann abgenommen werden.

Bei dem zuvor erläuterten Ausführungsbeispiel ist das Gehäuse 21 innerhalb des Zylindergehäuses 2 in axialer Richtung soweit verstellbar, bis die Klemmbacken 44, 45 mit dem Halteprofil 50 vollständig hinter die Oberseite der Kappe 38 zurückgezogen sind. Dies ermöglicht eine Positionierung eines Werkstücks, indem das Werkstück auf den planen Ober- oder Außenseiten der Kappe 38 hin und her geschoben werden kann.

Der Aufbau der Spannvorrichtung 1 ist dafür etwas komplizierter.

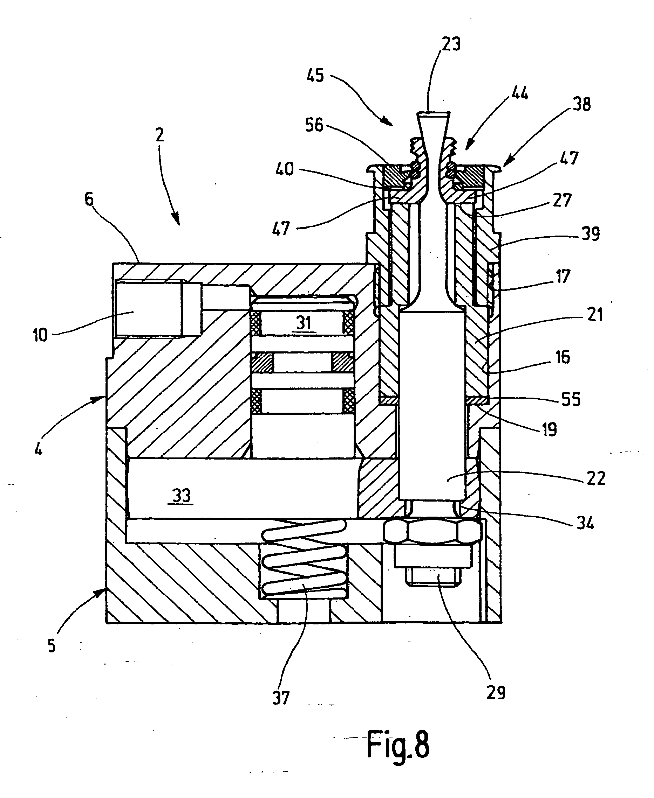

Fig. 8 zeigt ein Ausführungsbeispiel, bei dem die Klemmbacken 44 und 45 ständig ausgefahren sind. Die Darstellung entspricht der Darstellung nach Fig. 1, wobei bereits beschriebene Bauelemente mit denselben Bezugszeichen versehen sind, ohne dass eine erneute Erläuterung gegeben ist.

Das Gehäuse 21 steckt in der Stufenbohrung 16, wobei zwischen der Schulter 19 und der Unterseite des Gehäuses 21 eine Tellerfeder 55 eingelegt ist. Durch diese Tellerfeder wird das Gehäuse 16 nach oben vorgespannt bis die Stirnseite 27 gegen den Ringbund 47 der beiden Klemmbacken 44 und 45 anliegt. Dadurch wird der Ringbund 47 der Klemmbacken 44, 45 mit geringer Kraft gegen die plane Unterseite des Kappenbodens 40 angedrückt.

Die Feder 35 fehlt bei dem Ausführungsbeispiel nach Fig. 8; statt dessen reicht der zylindrische Teil des Zugbolzens 22 unmittelbar in die Stufenbohrung 34. Der Fortsatz 29 ist auf das Gewindestück verkürzt. Hierdurch kann der Zugbolzen 22 spielfrei mit der Mitnehmerscheibe 33 verschraubt sein.

Die Wirkungsweise der gezeigten Anordnung unterscheidet sich geringfügig von der bereits gegebenen Erläuterung.

Im Ruhezustand ist die Mitnehmerscheibe 33 nach oben gefahren, und zwar unter der Wirkung der Vorspannfeder 37. Hierdurch ist der starr mit der Mitnehmerscheibe 33 gekoppelte Zugbolzen 22, wie gezeigt, nach oben ausgefahren, wodurch die beiden Klemmbacken 44 und 45 durch die O-Ringe 49 radial zusammengefahren sind. Das Werkstück kann unmittelbar von oben in Längsrichtung des Zugbolzens 22 aufgesteckt werden. Sodann wird die Mitnehmerscheibe 33 mit Hilfe des Hydraulikkolbens 31 nach unten bewegt. Hierdurch wird der Zugbolzen 22 ebenfalls nach unten bewegt, wodurch das Keilglied 23 die beiden Klemmbacken 44 und 45 voneinander weg bewegt und in dem betreffenden Loch des Werkstücks verklemmt. Irgendwann wird die Bewegung des Spannbolzens 22 durch den Spalt zwischen den beiden Klemmbacken 44 und 45 zur Ruhe kommen, weil diese bereits mit Kraft an der Lochwand anliegen. Die weitere Abwärtsbewegung wird deswegen die Klemmbacken 44 und 45, die auf der Stirnseite 27 aufliegen, gegen die Wirkung der Tellerfeder 55 nach unten bewegen, da auch das Gehäuse 21 gegen die Wirkung der Tellerfeder 55 nach unten ausweicht. Hierdurch kann eine Niederzugspannung des Werkstücks erreicht werden.

Um ein Hereinfallen von Spänen zu verhindern, kann zusätzlich in dem Kappenboden 40 ein Lippendichtungsring versenkt angeordnet sein. Hierzu ist die Bohrung 41 als entsprechende Stufenbohrung ausgeführt.

Eine Spannvorrichtung enthält eine Zylinderkammer, in der ein hülsenförmiges Gehäuse verschieblich ist. Das hülsenförmige Gehäuse dient als Kolben. Durch das hülsenförmige Gehäuse führt ein Zugbolzen, der an seiner freien Stirnseite mit einem auf der Spitze stehenden Keilglied versehen ist. An dem Keilglied liegen zwei Spannbacken an. Wegen der Verwendung von lediglich zwei Spannbacken können sich die Spannbacken in einer Bohrung eines Werkstücks in Richtung rechtwinklig zu der Achse des Zugbolzens um Lagertoleranzen der Bohrung auszugleichen.

## Patentansprüche

1. Spanneinrichtung (3) zum Spannen von mit Bauteilöffnungen versehenen Bauteilen mittels dieser Bauteilöffnungen,
mit einem Gehäuse (21), das eine gerade Durchgangsöffnung (28) enthält,
mit einem in der Durchgangsöffnung (28) verschieblich gelagerten Zugbolzen (22),
mit einem Keilglied (23), das an einem Stirnende des Zugbolzens (22) angeordnet ist und lediglich zwei ebene Keilflächen (42, 43) trägt, die in Richtung auf den Zugbolzen (22) gegeneinander konvergieren, wobei die durch die Keilflächen (42, 43) definierten Ebenen eine Schnittlinie bilden, die rechtwinkelig zu der Längsachse des Zugbolzens (22) verläuft,
mit lediglich zwei Spannbacken (44, 45), von denen jede mit einer Außenfläche (50), die zur Anlage mit der Wand der Bauteilöffnung eingerichtet ist, und einer Anlagefläche (46) für die Keilfläche (42, 43) des Keilglieds (23) versehen ist, und
mit einem Vorspannmittel (49) für die Spannbacken (44, 45), um die Spannbacken (44, 45) mit den Keilflächen (42, 43) in Anlage zu halten,
**dadurch gekennzeichnet,**
**dass** das Vorspannmittel (49) von wenigstens einem O-Ring gebildet ist, der um die beiden Spannbacken (44, 45) herum liegt und gegen Flankenflächen (51) des Keilglieds (23), die zwischen den Keilflächen (42, 43) liegen, abdichtet.

2. Spanneinrichtung nach Anspruch 1, **dadurch gekennzeichnet, dass** das Gehäuse (21) als Kolben ausgebildet ist und verschieblich in einem Zylindergehäuse (2) sitzt.

3. Spanneinrichtung nach Anspruch 1, **dadurch gekennzeichnet, dass** das Gehäuse (21) eine rotationssymmetrische Gestalt aufweist.

4. Spanneinrichtung nach Anspruch 1, **dadurch gekennzeichnet, dass** das Gehäuse (21) an der Außenseite mit einem radial vorstehenden Bund (24) versehen ist, der eine Umfangsnut enthält, in der eine O-RingDichtung sitzt.

5. Spanneinrichtung nach Anspruch 2, **dadurch gekennzeichnet, dass** das Gehäuse (21) in dem Zylindergehäuse (2) in einer zylindrischen Bohrung (16) sitzt.

6. Spanneinrichtung nach Anspruch 2, **dadurch gekennzeichnet, dass** das Gehäuse (21) mittels einer Feder (25) in Richtung auf die in das Zylindergehäuse (2) abgesenkte Stellung vorgespannt ist.

7. Spanneinrichtung nach Anspruch 5, **dadurch gekennzeichnet, dass** die Bohrung (16) in dem Zylindergehäuse (2) einen Deckel (38) trägt, der mit einer Bohrung (41) zum Durchtritt der Spannbacken (44, 45) versehen ist.

8. Spanneinrichtung nach Anspruch 7, **dadurch gekennzeichnet, dass** der Deckel der Boden (40) einer Kappe (38) ist, die in das Zylindergehäuse (2) eingeschraubt ist.

9. Spanneinrichtung nach Anspruch 8, **dadurch gekennzeichnet, dass** die Kappe (38) einen axialen Kragen (39) aufweist, der ein Außengewinde trägt, mit dem die Kappe (38) in ein Gewinde (17) des Zylindergehäuses (2) eingeschraubt ist.

10. Spanneinrichtung nach Anspruch 9, **dadurch gekennzeichnet, dass** das Gewinde (17) koaxial zu der Bohrung (16) für das Gehäuse (21) ist.

11. Spanneinrichtung nach Anspruch 1, **dadurch gekennzeichnet, dass** der Zugbolzen (22) an seinem von dem Keilglied (23) abliegenden Ende mit einem Betätigungsglied (29,30) versehen ist.

12. Spanneinrichtung nach Anspruch 11, **dadurch gekennzeichnet, dass** das Betätigungsglied (29,30) mit einer Fluidkolbenanordnung (31,33) zusammenwirkt, die in dem Zylindergehäuse (2) axial verschieblich angeordnet ist.

13. Spanneinrichtung nach Anspruch 12, **dadurch gekennzeichnet, dass** die Fluidkolbenanordnung (31,33) einen in einer Zylinderkammer (9) beweglichen Kolben (31) aufweist, die mit einer Mitnehmerscheibe (33) verbunden ist, die sich in einem zu der Zylinderkammer (9) koaxialen Raum (15) befindet.

14. Spanneinrichtung nach Anspruch 13, **dadurch gekennzeichnet, dass** die Mitnehmerscheibe (33) an der Außenseite eine Begrenzungsfläche, entsprechend einer Kugelzone, aufweist, die symmetrisch zum Äquator liegt und deren Krümmungsradius dem Durchmesser des koaxialen Raums (15) entspricht, in dem die Mitnehmerscheibe (33) bewegbar ist.

15. Spanneinrichtung nach Anspruch 13, **dadurch gekennzeichnet, dass** die Mitnehmerscheibe (33) randseitig eine Bohrung (34) enthält, durch die der Spannbolzen (22) hindurch führt.

16. Spanneinrichtung nach Anspruch 13, **dadurch gekennzeichnet, dass** der Spannbolzen (22) mittels einer Feder (35), die sich in der Mitnehmerscheibe (33) abstützt, in die vorgeschobene Stellung vorgespannt ist, in der das Keilglied (23) maximal über das Gehäuse (21) vorsteht.

17. Spanneinrichtung nach Anspruch 1, **dadurch gekennzeichnet, dass** das Keilglied (23) zwischen den beiden Keilflächen (42, 43) durch Ausschnitte von Zylinderflächen begrenzt ist.

18. Spanneinrichtung nach Anspruch 1, **dadurch gekennzeichnet, dass** die Keilflächen (42, 43) miteinander einen Winkel zwischen 12° und 30° einschließen.

19. Spanneinrichtung nach Anspruch 1, **dadurch gekennzeichnet, dass** der Zugbolzen (22) abgesehen von dem Keilglied (23) rotationssymmetrisch ist.

20. Spanneinrichtung nach Anspruch 1, **dadurch gekennzeichnet, dass** das Keilglied (23) mit dem Zugbolzen (22) einstückig ist.

21. Spanneinrichtung nach Anspruch 1, **dadurch gekennzeichnet, dass** die Spannbacken (44, 45) an ihrer Außenseite eine Profilierung (50) aufweisen.

22. Spanneinrichtung nach Anspruch 21, **dadurch gekennzeichnet, dass** die Profilierung (50), im Querschnitt gesehen, sägezahnförmig ist.

23. Spanneinrichtung nach Anspruch 1, **dadurch gekennzeichnet, dass** die Spannbacken (44, 45) an jenem Ende, das dem Zugbolzen (22) benachbart ist, einen Anlageflansch (47) aufweisen.

24. Spanneinrichtung nach Anspruch 23, **dadurch gekennzeichnet, dass** die Anlageflansche (47) der beiden Spannbacken (44, 45), zusammen angenähert, einen kreisförmigen Flansch ergeben.

25. Spanneinrichtung nach Anspruch 23, **dadurch gekennzeichnet, dass** das Gehäuse (21) an dem dem Keilglied (23) benachbarten Stirnende (27) eine Anlagefläche für die Flansche (47) der Spannbacken (44, 45) aufweist.

26. Spanneinrichtung nach Anspruch 1, **dadurch gekennzeichnet, dass** die beiden Spannbacken (44, 45) zur Aufnahme des O-Rings Nuten (48) enthalten, die miteinander fluchten.

## Claims

1. Clamping device (3) for clamping components provided with component apertures by means of said component apertures,
comprising a housing (21), which contains a straight through-opening (28),
comprising a tie-bolt (22), which is mounted displaceably in the through-opening (28),
comprising a wedge element (23), which is disposed at one end of the tie-bolt (22) and bears only two flat wedge surfaces (42, 43) that converge towards one another in the direction of the tie-bolt (22), wherein the planes defined by the wedge surfaces (42, 43) form an intersection line that extends at right angles to the longitudinal axis of the tie-bolt (22), comprising only two clamping jaws (44, 45), each of which is provided with an outer surface (50), which is arranged for abutment with the wall of the component aperture, and with a contact face (46) for the wedge surface (42, 43) of the wedge element (23), and
comprising a biasing means (49) for the clamping jaws (44, 45) in order to hold the clamping jaws (44, 45) in abutment with the wedge surfaces (42, 43),
**characterized in**
**that** the biasing means (49) is formed by at least one O-ring, which is situated around the two clamping jaws (44, 45) and effects sealing against flank surfaces (51) of the wedge element (23) that lie between the wedge surfaces (42, 43).

2. Clamping device according to claim 1, **characterized in that** the housing (21) takes the form of a piston and is seated displaceably in a cylinder housing (2).

3. Clamping device according to claim 1, **characterized in that** the housing (21) has a rotationally symmetrical shape.

4. Clamping device according to claim 1, **characterized in that** the housing (21) is provided at the outside with a radially projecting flange (24), which contains a circumferential groove, in which an O-ring seal is seated.

5. Clamping device according to claim 2, **characterized in that** the housing (21) is seated in the cylinder housing (2) in a cylindrical bore (16).

6. Clamping device according to claim 2, **characterized in that** the housing (21) is biased by means of a spring (25) in the direction of the position of being lowered into the cylinder housing (2).

7. Clamping device according to claim 5, **characterized in that** the bore (16) in the cylinder housing (2) carries a cover (38), which is provided with a bore (41) for passage of the clamping jaws (44, 45).

8. Clamping device according to claim 7, **characterized in that** the cover is the base (40) of a cap (38) that is screwed into the cylinder housing (2).

9. Clamping device according to claim 8, **characterized in that** the cap (38) comprises an axial collar (39) that carries an external thread, by means of which the cap (38) is screwed into a thread (17) of the cylinder housing (2).

10. Clamping device according to claim 9, **characterized in that** the thread (17) is coaxial with the bore (16) for the housing (21).

11. Clamping device according to claim 1, **characterized in that** the tie-bolt (22) on its end remote from the wedge element (23) is provided with an actuating element (29, 30).

12. Clamping device according to claim 11, **characterized in that** the actuating element (29, 30) interacts with a fluid piston arrangement (31, 33) that is disposed in an axially displaceable manner in the cylinder housing (2).

13. Clamping device according to claim 12, **characterized in that** the fluid piston arrangement (31, 33) comprises a piston (31), which is movable in a cylinder chamber (9) and connected to a driver disk (33), which is situated in a space (15) that is coaxial with the cylinder chamber (9).

14. Clamping device according to claim 13, **characterized in that** the driver disk (33) at the outside has a boundary surface, corresponding to a spherical zone, which lies symmetrically to the equator and of which the radius of curvature corresponds to the diameter of the coaxial space (15), in which the driver disk (33) is movable.

15. Clamping device according to claim 13, **characterized in that** the driver disk (33) at the edge contains a bore (34), through which the tie-bolt (22) extends.

16. Clamping device according to claim 13, **characterized in that** the tie-bolt (22) is biased by means of a spring (35), which is supported in the driver disk (33), into the advanced position, in which the wedge element (23) projects to the maximum extent from the housing (21).

17. Clamping device according to claim 1, **characterized in that** the wedge element (23) is delimited between the two wedge surfaces (42, 43) by portions of cylinder surfaces.

18. Clamping device according to claim 1, **characterized in that** the wedge surfaces (42, 43) together include an angle of between 12° and 30°.

19. Clamping device according to claim 1, **characterized in that** the tie-bolt (22) apart from the wedge element (23) is rotationally symmetrical.

20. Clamping device according to claim 1, **characterized in that** the wedge element (23) is integral with the tie-bolt (22).

21. Clamping device according to claim 1, **characterized in that** the clamping jaws (44, 45) at their outside have profiling (50).

22. Clamping device according to claim 21, **characterized in that** the profiling (50), viewed in cross section, is of saw-tooth form.

23. Clamping device according to claim 1, **characterized in that** the clamping jaws (44, 45) at the end adjacent to the tie-bolt (22) have a contact flange (47).

24. Clamping device according to claim 23, **characterized in that** the contact flanges (47) of the two clamping jaws (44, 45), when brought together, produce a circular flange.

25. Clamping device according to claim 23, **characterized in that** the housing (21) on the end (27) adjacent to the wedge element (23) has a contact face for the flanges (47) of the clamping jaws (44, 45).

26. Clamping device according to claim 1, **characterized in that** the two clamping jaws (44, 45) for receiving the O-ring contain grooves (48) that are aligned with one another.

## Revendications

1. Dispositif de serrage (3) pour le serrage de pièces munies d'ouvertures, par l'intermédiaire de ces ouvertures,
comportant une cage (21), qui contient une ouverture de passage (28) rectiligne,
comportant un boulon de serrage (22) logé mobile dans l'ouverture de passage (28),
comportant un organe de calage (23), qui est agencé sur une extrémité frontale du boulon de serrage (22) et porte seulement deux faces de calage (42, 43) planes, qui convergent l'une vers l'autre dans le sens vers le boulon de serrage (22), sachant que les plans définis par les faces de calage (42, 43) forment une ligne de coupe, qui est perpendiculaire à l'axe longitudinal du boulon de serrage (22),
comportant seulement deux mâchoires de serrage (44, 45), dont chacune est munie d'une face extérieure (50), conçue pour prendre appui contre la paroi de l'ouverture de la pièce, et une surface d'appui (46) pour la face de calage (42, 43) de l'organe de calage (23), et
comportant un moyen de précontrainte (49) pour les mâchoires de serrage (44, 45), afin de maintenir les mâchoires de serrage (44, 45) en appui contre les faces de calage (42, 43),
**caractérisé en ce que**
le moyen de précontrainte (49) est formé par au moins un joint torique, qui est posé autour des deux mâchoires de serrage (44, 45) et assure l'étanchéité par rapport aux flancs (51) de l'organe de calage (23), lesquels sont situés entre les faces de calage (42, 43).

2. Dispositif de serrage selon la revendication 1, **caractérisé en ce que** la cage (21) est réalisée sous la forme d'un piston et est logée mobile dans un carter de cylindre (2).

3. Dispositif de serrage selon la revendication 1, **caractérisé en ce que** la cage (21) est configurée selon une symétrie de révolution.

4. Dispositif de serrage selon la revendication 1, **caractérisé en ce que** la cage (21) est munie, sur sa face extérieure, d'une collerette (24) en saillie radiale, qui contient une rainure périphérique, dans laquelle est logé un joint torique.

5. Dispositif de serrage selon la revendication 2, **caractérisé en ce que** la cage (21) est logée dans le carter de cylindre (2), dans un alésage cylindrique (16).

6. Dispositif de serrage selon la revendication 2, **caractérisé en ce que** la cage (21) est précontrainte par un ressort (25) vers la position abaissée dans le carter de cylindre (2).

7. Dispositif de serrage selon la revendication 5, **caractérisé en ce que** l'alésage (16) dans le carter de cylindre (2) porte un couvercle (38), qui est muni d'une forure (41) pour le passage des mâchoires de serrage (44, 45).

8. Dispositif de serrage selon la revendication 7, **caractérisé en ce que** le couvercle du fond (40) est une coiffe (38) qui est vissée dans le carter de cylindre (2).

9. Dispositif de serrage selon la revendication 8, **caractérisé en ce que** la coiffe (38) comporte un collet (39) axial, qui porte un filetage extérieur, par lequel la coiffe (38) est vissée dans un filet (17) du carter de cylindre (2).

10. Dispositif de serrage selon la revendication 9, **caractérisé en ce que** le filet (17) est coaxial à l'alésage (16) pour la cage (21).

11. Dispositif de serrage selon la revendication 1, **caractérisé en ce que** le boulon de serrage (22), au niveau de son extrémité détournée de l'organe de calage (23), est muni d'un organe d'actionnement (29, 30).

12. Dispositif de serrage selon la revendication 11, **caractérisé en ce que** l'organe d'actionnement (29, 30) coopère avec un système de piston à fluide (31, 33), qui est monté de manière axialement mobile dans le carter de cylindre (2).

13. Dispositif de serrage selon la revendication 12, **caractérisé en ce que** le système de piston à fluide (31, 33), comporte un piston (31) mobile dans une chambre (9) du cylindre, lequel est relié à un disque entraîneur (33) qui est situé dans un espace (15) coaxial à la chambre (9) du cylindre.

14. Dispositif de serrage selon la revendication 13, **caractérisé en ce que** le disque entraîneur (33), sur sa face extérieure, comporte une surface de délimitation, conforme à une zone sphérique, qui est située symétriquement par rapport à l'équateur et dont le rayon de courbure correspond au diamètre de l'espace (15) coaxial, dans lequel le disque entraîneur (33) est mobile.

15. Dispositif de serrage selon la revendication 13, **caractérisé en ce que** le disque entraîneur (33) comporte, sur son bord, une forure (34), à travers laquelle est guidé le boulon de serrage (22).

16. Dispositif de serrage selon la revendication 13, **caractérisé en ce que** le boulon de serrage (22) est précontraint par un ressort (35), qui prend appui dans le disque entraîneur (33), dans la position avancée, dans laquelle l'organe de calage (23) s'avance au maximum hors de la cage (21).

17. Dispositif de serrage selon la revendication 1, **caractérisé en ce que** l'organe de calage (23) est délimité entre les deux faces de calage (42, 43) par des découpes dans les surfaces du cylindre.

18. Dispositif de serrage selon la revendication 1, **caractérisé en ce que** les faces de calage (42, 43) délimitent entre elles un angle entre 12° et 30°.

19. Dispositif de serrage selon la revendication 1, **caractérisé en ce que** le boulon de serrage (22), à l'exception de l'organe de calage (23), est réalisé avec une symétrie de révolution.

20. Dispositif de serrage selon la revendication 1, **caractérisé en ce que** l'organe de calage (23) est réalisé d'un seul tenant avec le boulon de serrage (22).

21. Dispositif de serrage selon la revendication 1, **caractérisé en ce que** les mâchoires de serrage (44, 45) comportent un profilage (50) sur leur face extérieure.

22. Dispositif de serrage selon la revendication 21, **caractérisé en ce que** le profilage (50) est en forme de dents de scie sur une coupe transversale.

23. Dispositif de serrage selon la revendication 1, **caractérisé en ce que** les mâchoires de serrage (44, 45) comportent un collet d'appui (47) au niveau de l'extrémité qui est adjacente au boulon de serrage (22).

24. Dispositif de serrage selon la revendication 23, **caractérisé en ce que** les collets d'appui (47) des deux mâchoires de serrage (44, 45), rapprochées l'une de l'autre, forment un collet circulaire.

25. Dispositif de serrage selon la revendication 23, **caractérisé en ce que** la cage (21), au niveau de l'extrémité frontale (27) adjacente à l'organe de calage (23), comporte une surface d'appui pour les collets (47) des mâchoires de serrage (44, 45).

26. Dispositif de serrage selon la revendication 1, **caractérisé en ce que** les deux mâchoires de serrage (44, 45) contiennent des rainures (48), qui sont destinées à recevoir le joint torique et sont alignées l'une avec l'autre.
